# EUROPÄISCHE PATENTSCHRIFT

(11) **EP 4 144 624 B1**
(45) Veröffentlichungstag und Bekanntmachung des Hinweises auf die Patenterteilung: **21.05.2025**
(21) Anmeldenummer: 22184256.0
(22) Anmeldetag: 12.07.2022
(51) Int. Cl.: B62J 11/00, B62K 21/18

(54) **SYSTEM ZUR ANBRINGUNG EINES ZUBEHÖRTEILS AM VORBAU EINES FAHRRADS**
SYSTEM FOR ATTACHING AN ACCESSORY TO THE FRONT OF A BICYCLE
SYSTÈME DE MONTAGE D'UN ACCESSOIRE SUR LA POTENCE D'UNE BICYCLETTE

(30) Priorität: 07.09.2021 DE 102021123120
(43) Veröffentlichungstag der Anmeldung: 08.03.2023
(73) Patentinhaber: MPR GmbH & Co. KG, 95615 Marktredwitz (DE)
(72) Erfinder: Pürner, Marcus, 95615 Marktredwitz (DE)
(74) Vertreter: Tesch, Sabine

(56) Entgegenhaltungen:
- EP-B1- 2 583 885
- WO-A1-2018/197847
- CN-Y- 201 400 270
- DE-U1- 202007 013 693
- DE-U1- 202016 102 628
- DE-U1- 202017 001 538
- US-B1- 6 615 686

## Beschreibung

### Gebiet der Erfindung

Die Erfindung betrifft ein System zur Anbringung eines Zubehörteils am Vorbau eines Fahrrads. Weiter betrifft die Erfindung ein Zubehörteil für ein Fahrrad, welches insbesondere als Leuchte ausgebildet ist sowie eine Klemmschale für das System zur Anbringung eines Zubehörteils.

### Hintergrund der Erfindung

Es ist aus der Praxis bekannt, Zubehörteile, wie beispielsweise Leuchten, Fahrradcomputer, Bedienelemente für einen elektrischen Hilfsantrieb mittels einer Klemmschelle am Lenker des Fahrrads zu befestigen.

Insbesondere bei E-Bikes findet sich wegen der neben Schaltung, Bremsen und Klingel zusätzlich vorhandenen Bedienelemente oft nur noch wenig Platz, um am Lenker ein weiteres Zubehörteil, wie eine Leuchte, zu befestigen.

Weiter ist in vielen Fällen eine mittige Befestigung wünschenswert. Dies gilt insbesondere für Leuchten oder auch für schwerere Gegenstände, wie Transportboxen oder Transportkörbe, da bei einer mittigen Befestigung das Zubehörteil in direkter mechanischer Verbindung mit dem stabilen Vorbau steht, welcher den Lenker mit dem Gabelschaft verbindet.

Einer mittigen Befestigung stehen aber die Klemmschalen der Lenkerklemmung im Weg.

Da die Klemmschalen der Lenkerklemmung mittels Schrauben zusammengezogen werden, wäre es denkbar, diese Aufnahmepunkte für die Befestigung eines Zubehörteils zu nutzen.

Dies geht aber mit einer relativ umständlichen Anbringung des Zubehörteils einher. So muss zum An- und Abnehmen des Zubehörteils in diesem Fall die Lenkerklemmung gelöst werden.

Systeme zur Anbringung von Zubehör, insbesondere bei Fahrrädern, sind aus folgenden Dokumenten bekannt:
D1 WO 2018/197847 A1
D2 EP 2 583 885 B1
D3 DE 20 2007 013693 U1
D4 DE 20 2017 001538 U1
D5 DE 20 2016 102628 U1
D6 US 6 615 686 B1
D7 CN 201 400 270 Y
Die Dokumenten WO 2018/197847 A1 und EP 2 583 885 B1 offenbaren die Merkmalen der Präambel von Anspruch 1.

### Aufgabe der Erfindung

Der Erfindung liegt demgegenüber die Aufgabe zugrunde, ein System bereitzustellen, bei welchem die Lenkerklemmung auf einfache und formschöne Weise zur Anbringung eines Zubehörteils verwendet werden kann.

### Zusammenfassung der Erfindung

Die Aufgabe der Erfindung wird bereits durch ein System zur Anbringung eines Zubehörteils am Vorbau eines Fahrrads durch einen hierfür ausgebildeten Halter, ein Zubehörteil und eine Klemmschale nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein System zur Anbringung eines Zubehörteils am Vorbau eines Fahrrads.

Der Vorbau ist das Bauteil, welches die Lenkerstange mit dem Steuerrohr verbindet.

Die Lenkerstange ist dabei mittels einer Klemmung gehalten.

Die Klemmung umfasst, bezogen auf die Fahrtrichtung, eine vordere und eine hintere Klemmschale.

Die Klemmschalen werden mittels Schrauben verbunden. Die klemmende Befestigung der Lenkstange ermöglicht dabei eine Veränderung des Winkels der Lenkstange.

Gemäß der Erfindung umfasst das System eine Klemmschale, welche als Teil der Lenkerklemmung ausgebildet ist.

Insbesondere umfasst das System die vordere Klemmschale, welche mit vier Schrauben mit der hinteren Klemmschale verbunden wird.

Gemäß der Erfindung wird die Klemmschale aus zwei Hälften gebildet, wobei die zwei Hälften über zumindest einen Steg miteinander verbunden sind.

Unter einem Steg wird eine beliebige, quer zur Fahrtrichtung ausgebildete Strebe verstanden, welche die rechte mit der linken Hälfte der Klemmschale verbindet.

Gemäß der Erfindung wird also vorzugsweise eine ungeteilte vordere Klemmschale verwendet.

Weiter umfasst das System einen Halter für das Zubehörteil, welcher an dem zumindest einen Steg befestigbar ist.

Die Erfindung beruht also darauf, einen quer zur Fahrtrichtung verlaufenden Steg zur Befestigung des Zubehörteils zu verwenden. Es hat sich herausgestellt, dass so eine einfache und dennoch sehr stabile Befestigung bereitgestellt werden kann.

Zudem befindet sich die Befestigungsposition genau mittig vor dem Lenker, was insbesondere bei Verwendung des Systems zur Anbringung einer Leuchte vorteilhaft ist.

Es ist insbesondere vorgesehen, dass der Halter auf den zumindest einen Steg einhängbar ist.

So kann der Halter insbesondere zumindest einen Haken umfassen, welcher im angebrachten Zustand hinter den Steg greift. Zwischen dem Steg und der Lenkstange ist vorzugsweise ein Zwischenraum vorhanden. Der Steg ist hierzu vorzugsweise dünner ausgebildet als die angrenzenden Hälften der Klemmschale.

Vorzugsweise ist der Halter derart ausgebildet, dass er bei bestimmungsgemäßer Verwendung von oben in den Steg einhängbar ist.

Der Halter umfasst vorzugsweise eine Anlagefläche für die Lenkerstange, welche der Kontur, also der Krümmung der Lenkerstange, angepasst ist.

Gemäß der Erfindung umfasst der zumindest eine Steg einen nach außen zeigenden Fortsatz. Insbesondere umfasst der Steg zumindest einen Fortsatz, welcher in der Montageposition nach oben oder nach unten zeigt. Gemäß einer bevorzugten Ausführungsform ist ein erster Fortsatz vorgesehen, welcher nach unten zeigt sowie ein zweiter Fortsatz, welcher nach oben zeigt.

Die Bereitstellung eines seitlich nach außen ragenden Fortsatzes ermöglicht eine besonders einfache Herstellung der Klemmschale.

Des Weiteren kann der Fortsatz von dem Halter des Zubehörteils umgriffen werden.

Der zumindest eine Fortsatz ist bei einer Ausführungsform der Erfindung zwischen den Durchgangslöchern für die Klemmung der Klemmschale angeordnet.

Insbesondere befindet sich ein erster Fortsatz zwischen den beiden oberen Durchgangslöchern und ein zweiter Fortsatz zwischen den beiden unteren Durchgangslöchern.

Der Fortsatz kann im Wesentlichen quaderförmig ausgebildet sein.

Bei einer Weiterbildung der Erfindung ist der Halter auf dem zumindest einen Steg verrastbar. Unter einer Verrastung wird ein Einrasten eines federnd gelagerten Rastelements verstanden, welches den Halter auf dem Lenker sichert.

Es ist insbesondere vorgesehen, dass der Halter zumindest einen Haken umfasst, mit dem dieser am Steg eingehakt wird, sowie ein Rastelement, welches unter dem Steg einrastet und so den Halter gegen ein Aushängen sichert.

Der Halter ist insbesondere derart ausgebildet, dass er durch eine Drehung um die Mittelachse des Lenkers eingehängt werden kann. Das Rastelement muss so den Halter nur gegen ein Zurückdrehen sichern.

Das Rastelement ist vorzugsweise derart ausgebildet, dass der Benutzer das Rastelement gegen eine Federvorspannung entriegeln und so den Halter wieder abnehmen kann.

Bei einer Weiterbildung der Erfindung sind die beiden Hälften der Klemmschale über zwei Stege miteinander verbunden.

Zwischen den Stegen ist so eine Aussparung vorhanden.

Die zwei Stege ermöglichen so zum einen die Bereitstellung eines Halters, welcher mit zwei Haken von einer Seite her in die beiden Stege eingehängt wird.

Zum anderen kann die so zwischen den Stegen vorhandene Ausnehmung dazu dienen, das Rastelement gegen die Federvorspannung zurückzudrücken.

Hierzu kann die Ausnehmung angrenzend zu zumindest einem Steg abgeschrägt sein.

Alternativ oder in Kombination kann auch das Rastelement eine Führungsfläche aufweisen, also als Einschnappriegel ausgebildet sein.

Beim Einhängen des Halters federt so der Riegel gegen die Federvorspannung zurück, um sodann in seiner Endposition, bezogen auf die Aufschieberichtung, vor dem Steg einzurasten. Der Riegel ist also als Schnapper ausgebildet.

So wird eine besonders einfache Anbringung des Halters ermöglicht, welche sogar einhändig möglich ist.

Bei einer alternativen Ausführungsform der Erfindung, welche kein Rastelement aufweist, kann der Halter auch zwei Haken umfassen, nämlich einen ersten Haken, mit dem der Halter von einer Seite einhakbar ist und einen zweiten, beweglichen Haken, welcher von der anderen Seite auf dem zumindest einen Steg greift und welcher insbesondere mittels einer Schraube in einer Montageposition bewegt werden kann.

Diese Ausführungsform der Erfindung dient der langfristigen Anbringung eines Zubehörteils. Da bei dieser Ausführungsform der Halter nicht werkzeuglos abgenommen werden kann, besteht hier ein erhöhter Diebstahlschutz.

Der Halter kann insbesondere eine schräge Führungsfläche umfassen, mit der der Halter entlang einer so gebildeten Rampe zum Befestigen in Richtung des anderen Halters gezogen werden kann.

Durch die Erfindung kann insbesondere ein System mit zwei verschiedenen Ausführungsformen eines Halters bereitgestellt werden, nämlich einem ersten Halter, welcher auf den Steg aufrastbar ist. Dieser Halter kann für Zubehörteile verwendet werden, die der Benutzer nur gelegentlich mitführen will.

Ein anderer Halter des Systems ist dagegen über zwei Haken mittels einer Schraube befestigbar und wird dann verwendet, wenn ein Zubehörteil dauerhaft am Vorbau befestigt sein soll.

Die Erfindung betrifft des Weiteren einen für vorstehendes System ausgebildeten Halter, welches also dazu ausgebildet ist, auf einen quer zur Fahrtrichtung angeordneten Steg einer Lenkerklemme eingehängt zu werden.

Weiter betrifft die Erfindung einen mit dem Halter ausgestattetes Zubehörteil für ein Fahrrad. Dieses kann beispielsweise als Leuchte, als Fahrradcomputer, als elektronisches Bedienteil, insbesondere für die Steuerung eines E-Bikes, als Smartphone-Halterung, als Navigationssystem, als Tasche, als Kamera, als Flaschenhalter oder als Aufbewahrungsbox ausgebildet sein.

Weiter betrifft die Erfindung eine Klemmschale, welche für vorstehend beschriebendes System ausgebildet ist.

Die Klemmschale kann insbesondere zwei Hälften umfassen, welche über zwei voneinander beabstandete Stege miteinander verbunden sind.

Zwischen dem jeweiligen Steg und der Lenkerstange befindet sich ein Zwischenraum zum Einhängen eines Halters.

Eine derartige Klemmschale unterscheidet sich optisch kaum von üblichen Klemmschalen, wie sie auf dem Markt verfügbar sind. Insbesondere ist der Zwischenraum zwischen Steg und Lenkerstange kaum sichtbar, da es sich nur um einen Spalt von vorzugsweise 1 bis 3 mm Höhe handelt.

Die Erfindung betrifft des Weiteren ein Fahrrad, welches die Klemmschale umfasst. Insbesondere handelt es sich um die vordere Klemmschale der Lenkerklemmung.

### Kurzbeschreibung der Zeichnungen

Der Gegenstand der Erfindung soll im Folgenden bezugnehmend auf die Zeichnungen Fig. 1 bis Fig. 16 anhand von Ausführungsbeispielen erläutert werden, wobei Fig. 14 bis 16 die erfindungsgemäße Ausführungsform einer Klemmschale zeigen.
Fig. 1 bis Fig. 9 zeigen ein Zubehörteil nebst Halter und Lenkerklemmung, wobei der Halter auf der Lenkerklemmung verrastbar ist. Diese Ausführungsform der Erfindung dient vor allem der temporären Befestigung.
Fig. 10 bis Fig. 13 zeigen eine alternative Ausführungsform eines Halters, welcher mittels einer Schraube befestigt wird und dementsprechend eher der dauerhaften Anbringung eines Zubehörteils dient.

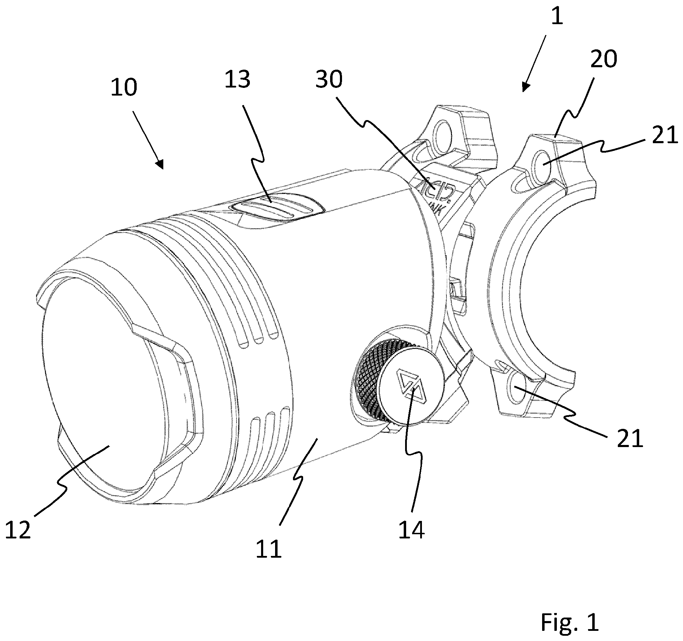

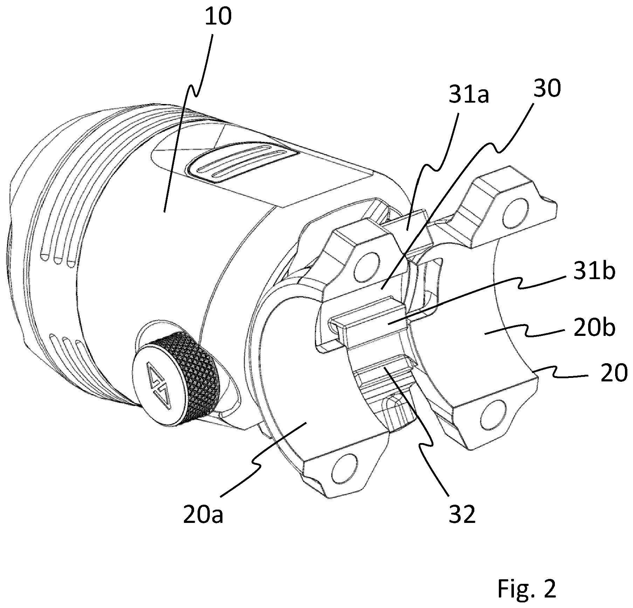

Fig. 1 und Fig. 2 sind perspektivische Ansichten des Zubehörteils nebst Halter und Lenkerklemmung.

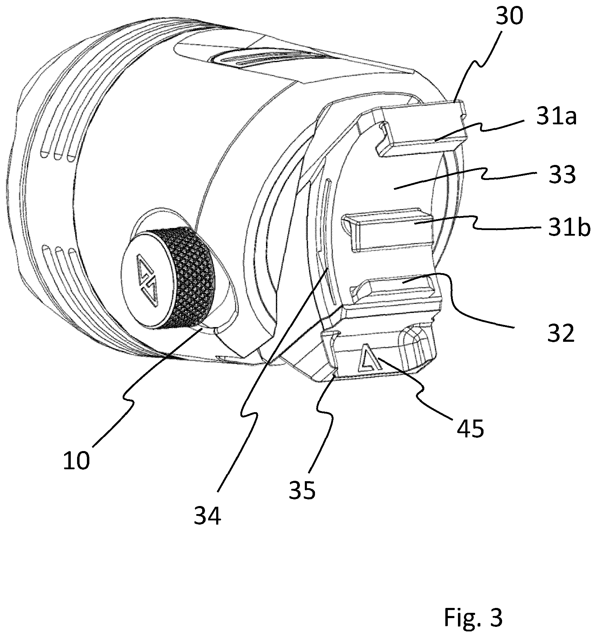

Fig. 3 ist eine perspektivische Ansicht des Zubehörteils nebst Halter.

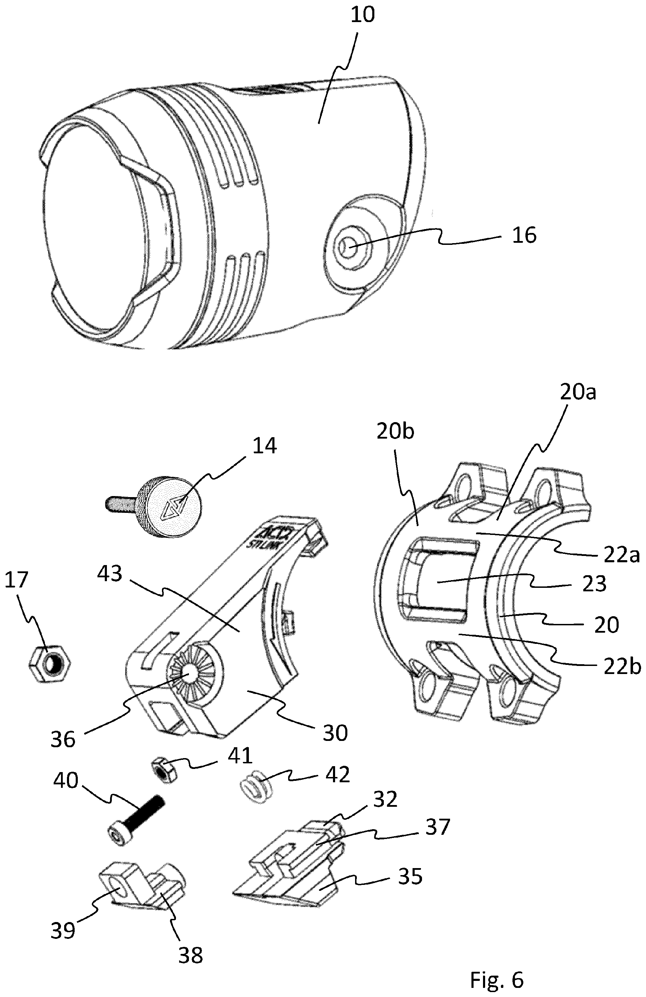

Fig. 6 ist eine Explosionsdarstellung des Zubehörteils nebst der Komponenten des Halters.

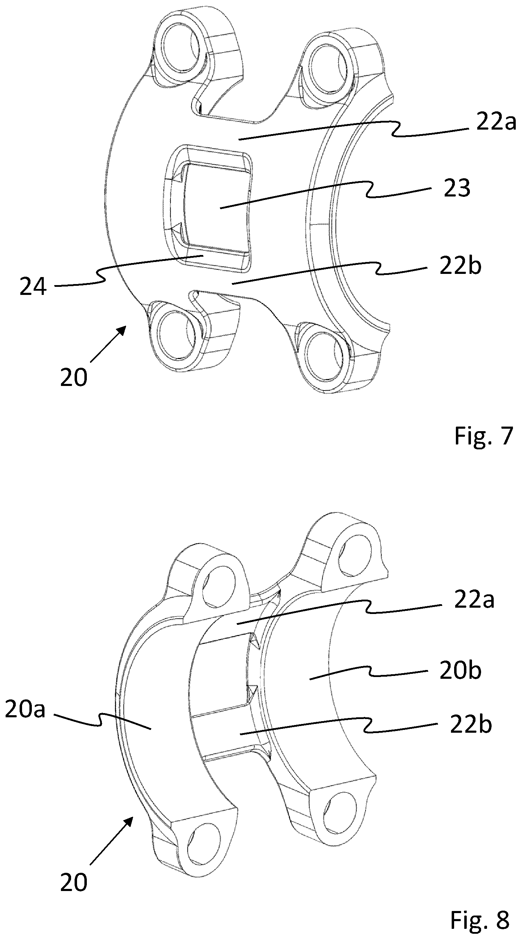

Fig. 7 und Fig. 8 sind perspektivische Ansichten der Klemmschale.

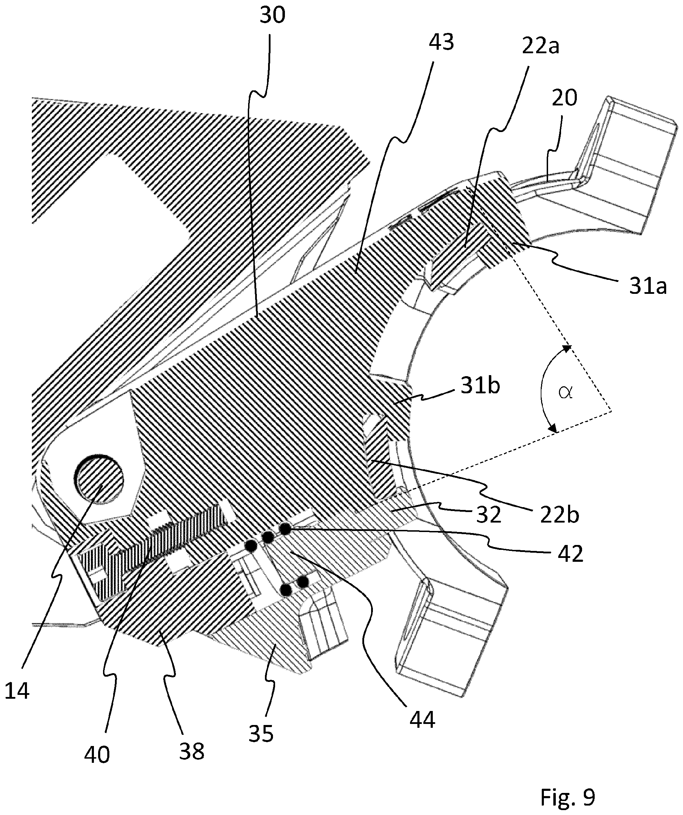

Fig. 9 ist ein Längsschnitt des an die Klemmschale angebrachten Halters.

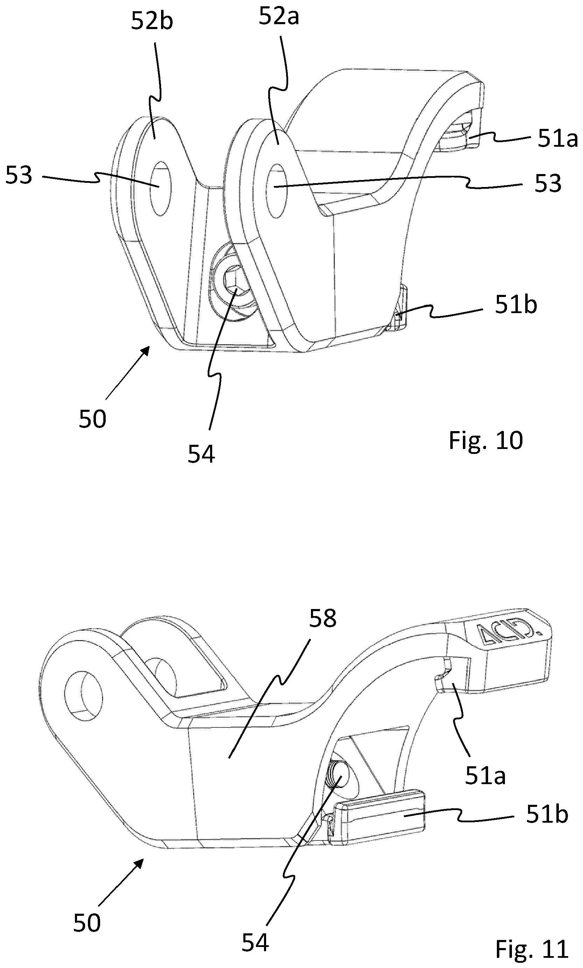

Fig. 10 und Fig. 11 sind perspektivische Ansichten eines weiteren Ausführungsbeispiels eines Halters.

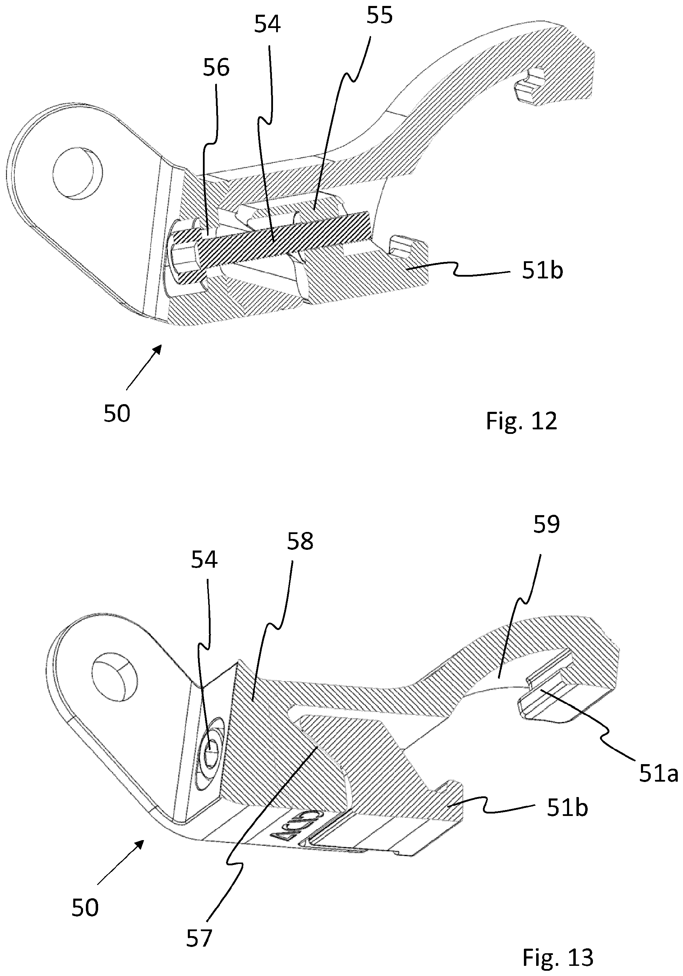

Fig. 12 ist ein mittiger Längsschnitt.
Fig. 13 ist ein Längsschnitt, welcher neben der Schraube zur Befestigung entlangführt.

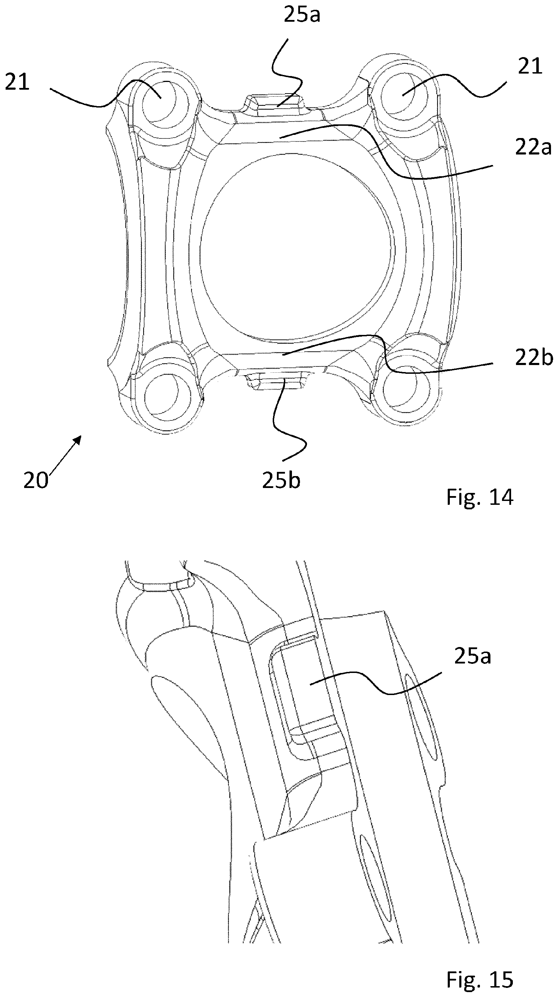

Fig. 14 ist eine perspektivische Ansicht einer weiteren Ausführungsform einer Klemmschale für das erfindungsgemäße System.

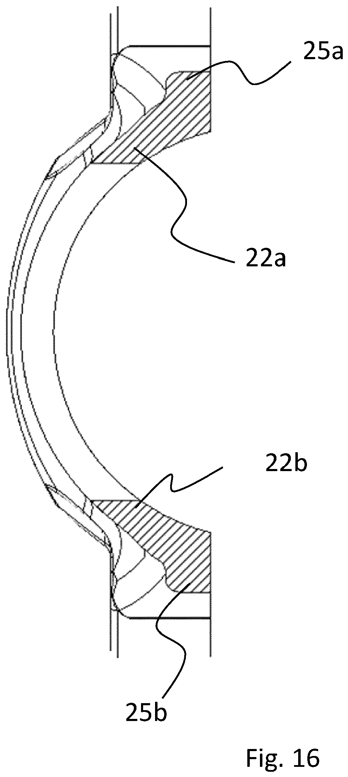

Fig. 15 ist eine Detailansicht und Fig. 16 ist ein mittiger Längsschnitt der Klemmschale.

### Detaillierte Beschreibung der Zeichnungen

Fig. 1 zeigt in einer perspektivischen Ansicht ein als Leuchte 10 ausgebildetes Zubehörteil, welches mit einem System 1 zur Befestigung eines Zubehörteils anbringbar ist. Die Leuchte 10 ist mittels eines Halters 30 an der Klemmschale 20 einer Lenkerklemmung angebracht.

Dargestellt ist nur die vordere Klemmschale 20, welche vier Durchgangslöcher 21 umfasst, mit denen diese mit der hinteren Klemmschale verbunden wird und so der Klemmung der Lenkerstange dient.

Der Halter 30 ist mit der Klemmschale 20 verbunden.

Die Leuchte 10 ist als Akkuleuchte ausgebildet und umfasst ein vorzugsweise kreiszylindrisch ausgebildetes Gehäuse 11 mit einer Lichtaustrittsscheibe 12. Auf der Oberseite des Gehäuses 11 befindet sich ein Schalter 13 zum Anschalten der Leuchte 10.

Die Leuchte 10 ist gegenüber dem Halter 30 verschwenkbar. Vorzugsweise kann die Leuchte von einer horizontalen Position, also waagerecht zur Horizontalen, bis zu einem Winkel von 10 bis 30° verstellt werden.

Um die Leuchte 10 zu verschwenken, ist in diesem Ausführungsbeispiel eine Rändelschraube 14 vorgesehen. Der Benutzer kann die Rändelschraube 14 lockern und sodann die Leuchte 10 verstellen und die Rändelschraube 14 wieder festziehen.

Die Leuchte 10 befindet sich unmittelbar vor der Klemmschale 20. In diesem Ausführungsbeispiel ist die Leuchte 10 nicht höher als die Klemmschale 20. So wird eine formschöne und kompakte Ausgestaltung bereitgestellt.

Fig. 2 ist eine weitere perspektivische Ansicht auf die Leuchte 10 zusammen mit dem Halter 30 und der Klemmschale 20. Der Halter 30 umfasst auf der Rückseite in diesem Ausführungsbeispiel die Haken 31a und 31b, mit denen der Halter 30 zwischen den Hälften 20a, 20b der Klemmschale 20 eingehängt wird.

Weiter umfasst der Halter 30 einen Riegel 32, welcher in der montierten Position verrastet, so dass die Haken 31a und 31b nicht nach oben ausgehängt werden können.

Fig. 3 ist eine perspektivische Ansicht nur der Leuchte 10 nebst Halter 30.

Der Halter 30 umfasst eine Anlagefläche 33, welche vorzugsweise konzentrisch zur Mittelachse des Lenkers ausgerichtet ist.

Der Halter 30 wird entsprechend der Richtungsmarkierung 34 von oben auf der Klemmschale eingehakt. Der Riegel 32 kann gegen eine Federvorspannung eingeschoben werden und verrastet an der Klemmschale.

Um die Leuchte 10 wieder zu entfernen, erfasst der Halter 30 ein Betätigungsorgan 35.

Das Betätigungsorgan 35 umfasst den Riegel 32 und kann über eine Greifausnehmung 45 in proximaler Richtung bewegt werden, so dass sich der Riegel zurückbewegt und die Leuchte 10 wieder ausgehängt und abgenommen werden kann.

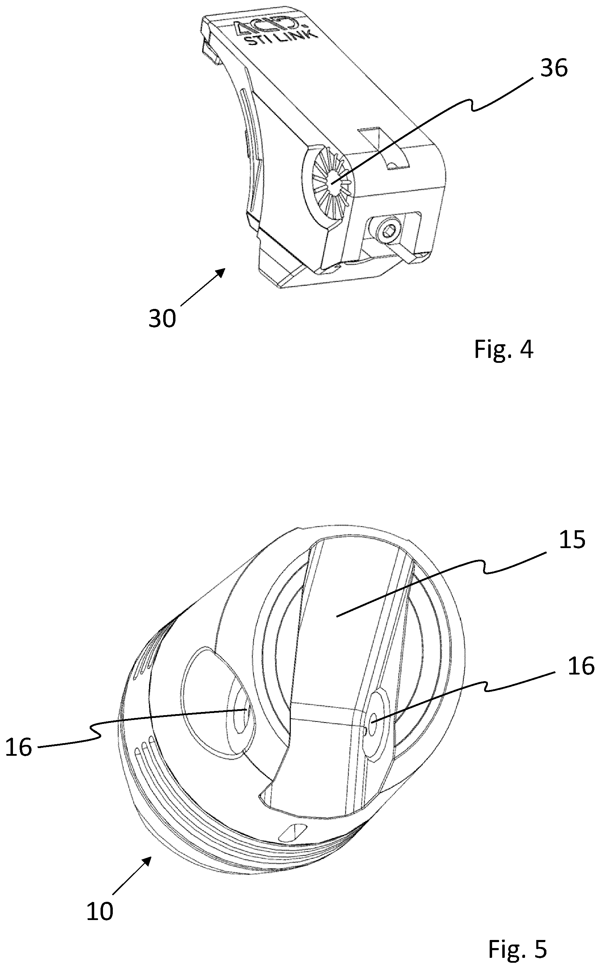

Fig. 4 ist eine perspektivische Ansicht nur des Halters.

Der Halter 30 ist als im Einbauzustand in Fahrtrichtung ausgerichteter Arm ausgebildet und umfasst vorne ein Durchgangsloch 36, an welchem die Leuchte angebracht wird. Dieses kann eine Profilierung umgeben, welche als Verdrehsicherung für die Rändelschraube dient.

Die in Fig. 5 in einer perspektivischen Ansicht auf die Hinterseite dargestellte Leuchte 10 umfasst eine mittige, sich auf der Rückseite vertikal erstreckenden Nut 15, welche auf der Oberseite zum Rand hin ausläuft.

Angrenzend an die Nut 15 sind Durchgangslöcher 16 durch das Gehäuse geführt, um so die Leuchte 10 auf dem in Fig. 4 dargestellten Halter (30) anzubringen.

Der Halter wird also teilweise durch das Gehäuse der Leuchte 10 umschlossen, was ebenfalls zu einer kompakten Bauform beiträgt.

Fig. 6 ist eine Explosionsdarstellung der Leuchte nebst dem System zur Anbringung eines Zubehörteils.

Wie bereits vorstehend beschrieben, umfasst die Leuchte 10 ein Durchgangsloch 16, mit welchem diese mittels der Rändelschraube 14 und der Mutter 17 an dem Durchgangsloch 36 des Halters 30 befestigt wird.

Der Halter 30 umfasst ein Hauptgehäuse 43, in welchem das Betätigungsorgan 35 mit dem Riegel 32 längs verschiebbar gelagert ist.

Hierzu umfasst das Betätigungsorgan 35 Schienen 37, welche in komplementär ausgebildete Schienen des Hauptgehäuses 43 greifen.

Das Betätigungsorgan 35 wird mittels der Frontplatte 38 an dem Hauptgehäuse 43 montiert.

Hierzu ist die Mutter 41 in das Hauptgehäuse 43 eingesetzt.

Die Frontplatte 38 umfasst ein Durchgangsloch 39 für die Schraube 40 zur Befestigung.

Weiter ist zwischen Frontplatte 38 und Betätigungsorgan 35 eine Feder 42, in diesem Ausführungsbeispiel eine Schraubenfeder, vorgesehen. Die Feder 42 sitzt zwischen der Frontplatte 38 und dem Betätigungsorgan 35.

Das Betätigungsorgan 35 ist im montierten Zustand gegen die Vorspannung der Feder 42 in proximaler Richtung verschiebbar.

Die Klemmschale 20 umfasst die beiden Hälften 20a und 20b, welche über die um den Umfang verteilten Stege 22a, 22b miteinander verbunden sind.

Demzufolge ist zwischen den Stegen 22a und 22b eine Öffnung 23 vorhanden.

Fig. 7 ist eine perspektivische Ansicht der Klemmschale 20.

Zu erkennen ist, dass zumindest der Steg 22b, vorzugsweise auch der Steg 22a, angrenzend an die Öffnung 23 eine Rampe 24, also eine schrägstehende Fläche, umfasst, welche das Einschnappen des Riegels 32 beim Anbringen erleichtern kann.

Der Riegel wird also beim Anbringen automatisch zurückgedrückt, ohne dass der Benutzer das Betätigungsorgan betätigen muss.

Wie in der perspektivischen Ansicht auf die Innenseite gemäß Fig. 8 dargestellt, sind die zwischen den Hälften 20a und 20b der Klemmschale 20 angeordneten Stege 22a und 22b dünner ausgebildet als die beiden Hälften 20a, 20b der Klemmschale, so dass im angebrachten Zustand zwischen der Innenseite des jeweiligen Stegs 22a, 22b und der Lenkerstange ein Zwischenraum vorhanden ist, welcher der Aufnahme eines Hakens dient.

Fig. 9 ist ein mittiger Längsschnitt des an der Klemmschale 20 montierten Halters 30.

Der Halter 30 umfasst ein Hauptgehäuse 43 mit den beiden Haken 31a, 31b, welche von oben auf die Stege 22a, 22b der Klemmschale 20 gehängt werden.

Dabei wird der Halter 30 um die Mittelachse des Lenkers gedreht.

Der Riegel 32, welcher einstückig mit dem Betätigungsorgan 35 ausgebildet ist, wird dabei gegen die Vorspannung der Feder 42 eingeschoben und verrastet den Halter 30 in der hier dargestellten Position, indem der Riegel 32 in der Endposition unter den Steg 22b schnappt.

Die Feder 42 sitzt in einer entsprechenden Ausnehmung des Hauptgehäuses 43 und ist auf einer Federaufnahme 44 des Betätigungsorgans 35 gelagert.

Die Ausnehmung für die Feder 42 ist mit der Frontplatte 38 verschlossen. Die Frontplatte 38 ist mit der Schraube 40 an dem Hauptgehäuse 43 angebracht.

Die Feder 42 befindet sich unterhalb der Schraube 40 und ist parallel zu der Schraube 40 angeordnet.

Die Rändelschraube 14, welche der Befestigung der Leuchte dient, bildet zugleich das Schwenklager der Leuchte, welches quer zur Fahrtrichtung angeordnet ist.

Der oder die Stege 22a, 22b nehmen vorzugsweise einen Winkel α von 30 bis 150°, besonders bevorzugt von 50 bis 110° ein.

Fig. 10 ist eine perspektivische Ansicht eines Halters 50 gemäß einer alternativen Ausführungsform der Erfindung.

Der Halter 50 wird bestimmungsgemäß an der zuvor dargestellten Klemmschale 20 angebracht.

Hierfür umfasst der Halter die beiden Haken 51a, 51b, welche von entgegengesetzten Seiten auf den Steg greifen.

Der Halter 50 sitzt so ebenfalls unmittelbar vor der Klemmschale.

Gemäß dieses Ausführungsbeispiels umfasst der Halter zwei schräg nach oben ausgerichtete Arme 52a, 52b, die jeweils ein Durchgangsloch 53 umfassen.

Zwischen den Armen 52a und 52b sowie an deren Außenflächen kann so ein Zubehörteil befestigt werden.

Der Halter 50 wird durch Anziehen der, bezogen auf die in Fahrtrichtung von vorn zugänglichen Schraube 54 an der Klemmschale 20 festgelegt.

Im montierten Zustand greifen die beiden Arme 51a, 51b jeweils unter einen Steg. Fig. 11 zeigt die Montageposition.

Der Arm 51b ist gegenüber dem Hauptgehäuse 58 des Halters 50 beweglich und kann mittels der Schraube 54 nach unten bewegt werden, um den Halter 50 zu demontieren.

Fig. 12 ist ein mittiger Längsschnitt durch den Halter 50.

Die Schraube 54 wird durch das Durchgangsloch 56 geführt und sitzt in einem Gewinde 55 des Hakens 51b.

Das Durchgangsloch 56 ist derart ausgelegt, dass die Schraube 54 derart Spiel hat, dass sie einer Bewegung des Hakens 51b nach unten folgen kann.

Wie in dem parallel zur Schraube 54 ausgeführten Längsschnitt gemäß Fig. 13 dargestellt, umfasst das Hauptgehäuse 58 eine Rampe 57.

Bei der Rampe 57 handelt es sich insbesondere um eine Fläche, welche im Winkel von 20 bis 70° zur Horizontalen (bei bestimmungsgemäßer Anbringung) ausgerichtet ist.

Der Haken 51b umfasst ebenfalls eine schräg ausgerichtete Anlagefläche, welche auf der Rampe 57 läuft.

An den Haken 51a, 51b grenzt eine Anlagefläche 59 an, welche konzentrisch zur Mittelachse des Lenkers angeordnet ist.

Wird die Schraube 54 losgedreht, so bewegt sich der Haken 51a, 51a in distaler Richtung und gleichzeitig nach unten. So kann der Halter 50 unten abgezogen und sodann oben ausgehängt werden.

Beim Festziehen der Schraube 54 bewegt sich der Haken 51b demzufolge in die Gegenrichtung, also nach oben, wobei er unter den Steg greift und spannt durch eine Bewegung in proximaler Richtung zugleich den Halter 50 an der Klemmschale fest.

Fig. 14 ist eine perspektivische Ansicht eines erfindungsgemäßen Ausführungsbeispiels einer Klemmschale 20.

Bei dieser Ausführungsform der Erfindung ist die Klemmschale 20 ebenfalls ungeteilt.

Diese umfasst zwei Stege, nämlich einen oberen Steg 22a und einen unteren Steg 22b.

An der Seite des Stegs 22a, 22b ragt jeweils ein Fortsatz 25a, 25b nach außen. Der Fortsatz 25a ragt in der Montageposition nach oben und der Fortsatz 25b ragt in der Montageposition nach unten.

Die Fortsätze 25a, 25b sind dabei jeweils zwischen den Durchgangslöchern 21 für die Klemmung angeordnet.

Der Halter des Zubehörteils kann nunmehr an den Fortsätzen 25a, 25b angreifen und so das Zubehörteil sichern.

Statt wie hier dargestellt zwei Stege 22a, 22b ist es gemäß einer anderen Ausführungsform vorgesehen, dass die Klemmschale 20 geschlossen ist und die hier dargestellte mittige Öffnung nicht aufweist. Eine derartige Klemmschale hätte mithin nur einen Steg, welcher die beiden Hälften miteinander verbindet.

Wie in der Detailansicht gemäß Fig. 15 dargestellt, ist der Fortsatz 25a im Wesentlichen quaderförmig ausgebildet und hat vorne abgerundete Ecken. Die Rückseite, also die an die Lenkstange angrenzende Seite, hat dagegen keine abgerundeten Ecken. So findet der Halter des Zubehörteils einen besseren Halt.

Wie insbesondere in dem mittigen Längsschnitt gemäß Fig. 16 zu erkennen, sind die Stege 22a, 22b im Unterschied zu dem vorstehend beschriebenen Ausführungsbeispiel nicht hinterschnitten, und zwar auch nicht im Bereich der Fortsätze 25a, 25b.

Die Stege einschließlich der Fortsätze gehen mithin ohne Bildung einer Kante in die restliche Klemmschale über. Dies hat produktionstechnische Vorteile. Es muss im Gegensatz zu dem vorstehend beschriebenen Ausführungsbeispiel kein zusätzlicher Fertigungsschritt zur Bereitstellung des Hinterschnitts durchgeführt werden.

Durch die Erfindung konnte ein flexibel und einfach verwendbares System zur Anbringung von Zubehörteilen, wie Leuchten, bereitgestellt werden.

### Bezugszeichenliste

- 1: System zur Anbringung eines Zubehörteils
- 10: Leuchte
- 11: Gehäuse
- 12: Lichtaustrittsscheibe
- 13: Schalter
- 14: Rändelschraube
- 15: Nut
- 16: Durchgangsloch
- 17: Mutter
- 20: Klemmschale
- 20a,20b: Hälften der Klemmschale
- 21: Durchgangsloch
- 22a: Steg
- 22b: Steg
- 23: Öffnung
- 24: Rampe
- 25a, 25b: Fortsatz
- 30: Halter
- 31a,31b: Haken
- 32: Riegel
- 33: Anlagefläche
- 34: Richtungsmarkierung
- 35: Betätigungsorgan
- 36: Durchgangsloch
- 37: Schiene
- 38: Frontplatte
- 39: Durchgangsloch
- 40: Schraube
- 41: Mutter
- 42: Feder
- 43: Hauptgehäuse
- 44: Federaufnahme
- 45: Greifaussparung
- 50: Halter
- 51a,51b: Haken
- 52: Arm
- 53: Durchgangsloch
- 54: Schraube
- 55: Gewinde
- 56: Durchgangsloch
- 57: Rampe
- 58: Hauptgehäuse
- 59: Anlagefläche

## Patentansprüche

1. System zur Anbringung eines Zubehörteils (1) am Vorbau eines Fahrrads, umfassend eine Klemmschale (20), welche als Teil der Lenkerklemmung ausgebildet ist, wobei die Klemmschale (20) aus zwei Hälften gebildet wird, wobei die zwei Hälften über zumindest einen Steg (22a) miteinander verbunden ist,
wobei das System einen Halter (30) für das Zubehörteil umfasst, welcher an dem zumindest einen Steg (22a) befestigbar ist, **dadurch gekennzeichnet, dass** der zumindest eine Steg (22a) einen nach außen zeigenden Fortsatz (25a, 25b) aufweist.

2. System zur Anbringung eines Zubehörteils (1) nach dem vorstehenden Anspruch, **dadurch gekennzeichnet, dass** der Halter (30) auf den zumindest einen Steg (22a) einhängbar ist.

3. System zur Anbringung eines Zubehörteils (1) nach einem der vorstehenden Ansprüche, **dadurch gekennzeichnet, dass** der Halter (30) auf dem zumindest einen Steg (22a) verrastbar ist.

4. System zur Anbringung eines Zubehörteils (1) nach dem vorstehenden Anspruch, **dadurch gekennzeichnet, dass** die Verrastung mittels eines gegen eine Federvorspannung betätigbaren Verriegelungsorgans entriegelbar ist.

5. System zur Anbringung eines Zubehörteils (1) nach dem einem der vorstehenden Ansprüche, **dadurch gekennzeichnet, dass** das System einen in Montageposition nach oben und einen nach unten zeigenden Fortsatz (25a, 25b) umfasst.

6. System zur Anbringung eines Zubehörteils (1) nach einem der vorstehenden Ansprüche, **dadurch gekennzeichnet, dass** der zumindest eine Fortsatz (25a, 25b) zwischen Durchgangslöchern (16) der Klemmschale (20) angeordnet ist.

7. System zur Anbringung eines Zubehörteils (1) nach einem der drei vorstehenden Ansprüche, **dadurch gekennzeichnet, dass** der zumindest eine Fortsatz (25a, 25b) im Wesentlichen quaderförmig ausgebildet ist.

8. System zur Anbringung eines Zubehörteils (1) nach einem der vorstehenden Ansprüche, **dadurch gekennzeichnet, dass** die beiden Hälfen über zumindest zwei um den Umfang verteilter Stege (22a) miteinander verbunden sind, insbesondere wobei die Stege (22a) angrenzend zu einer zwischen den Stegen (22a) angeordneten Ausnehmung abgeschrägt sind.

9. System zur Anbringung eines Zubehörteils (1) nach einem der vorstehenden Ansprüche, **dadurch gekennzeichnet, dass** der Halter (30) einen Schnapper aufweist, welcher an dem zumindest einen Steg (22a) verrastet,
und/oder dass der Halter (30) zwei Haken 31a, 31b) umfasst, mit welchem dieser von einer Seite her auf zwei Stege (22a) einhängbar ist,
oder dass der Halter (30) einen Haken (31a, 31b) umfasst, mit welchem er von einer Seite einhakbar ist sowie einen weiteren beweglichen Haken (30), mit welchem er von der entgegengesetzten Seite einhakbar ist, insbesondere ein Haken (30), der mittels einer Schraube (40) entlang einer schrägen Führungsfläche bewegbar ist,
und/oder dass das System einen ersten Halter (30) umfasst, welcher einrastbar ist, sowie einen zweiten Halter (30), welcher mittels einer Schraube (40) befestigbar ist, insbesondere mittels eines über die Schraube (40) bewegbaren Hakens (31a, 31b),
und/oder dass der zumindest eine Steg (22a) einen Teilkreis-förmigen Querschnitt aufweist,
und/oder dass ein Hauptgehäuse (43) des Halters (30) eine ringförmige Anlagefläche (59) aufweist.

10. Halter (30), ausgebildet für ein System nach einem der vorstehenden Ansprüche.

11. Zubehörteil für ein Fahrrad, insbesondere Leuchte (10), Fahrradcomputer, elektronisches Bedienteil, Tasche, Kamera, Flaschenhalter oder Aufbewahrungsbox, umfassend einen Halter (30) nach dem vorstehenden Anspruch.

12. Klemmschale (20), ausgebildet für ein System nach einem der vorstehenden Ansprüche.

13. Fahrrad mit einer Lenkerklemmung, umfassend zumindest eine Klemmschale (20) nach dem vorstehenden Anspruch.

## Claims

1. A system for attaching an accessory (1) to the stem of a bicycle, comprising a clamping shell (20) which is formed as part of the handlebar clamp, wherein the clamping shell (20) is defined by two halves, the two halves being connected to one another via at least one web (22a);
wherein the system comprises a holder (30) for the accessory, which holder can be fastened to the at least one web (22a);
**characterized in that** the at least one web (22a) has an outwardly pointing extension (25a, 25b).

2. The system for attaching an accessory (1) according to the preceding claim, **characterized in that** the holder (30) can be suspended on the at least one web (22a).

3. The system for attaching an accessory (1) according to any one of the preceding claims, **characterized in that** the holder (30) can be latched onto the at least one web (22a).

4. The system for attaching an accessory (1) according to the preceding claim, **characterized in that** the latch connection can be unlocked by means of a locking member that is actuatable against a spring preload.

5. The system for attaching an accessory (1) according to any one of the preceding claims, **characterized in that** the system comprises one extension pointing upwards and one extension pointing downwards (25a, 25b) in the assembled position.

6. The system for attaching an accessory (1) according to any one of the preceding claims, **characterized in that** the at least one extension (25a, 25b) is provided between through holes (16) of the clamping shell (20).

7. The system for attaching an accessory (1) according to any one of the three preceding claims, **characterized in that** the at least one extension (25a, 25b) is substantially cuboid in shape.

8. The system for attaching an accessory (1) according to any one of the preceding claims, **characterized in that** the two halves are connected to one another via at least two webs (22a) distributed around the circumference, in particular wherein the webs (22a) are bevelled adjacent to a recess provided between said webs (22a).

9. The system for attaching an accessory (1) according to any one of the preceding claims, **characterized in that**
the holder (30) has a snap which engages on the at least one web (22a);
and/or that the holder (30) comprises two hooks (31a, 31b) with which it can be hooked onto two webs (22a) from one side;
or that the holder (30) comprises a hook (31a, 31b) with which it can be hooked from one side, and a further, movable hook (30) with which it can be hooked from the opposite side, in particular a hook (30) which can be moved along an inclined guide surface by means of a screw (40);
and/or that the system comprises a first holder (30) which can be latched, and a second holder (30) which can be fastened by means of a screw (40), in particular by means of a hook (31a, 31b) which can be moved via the screw (40);
and/or that the at least one web (22a) has a partially circular cross-section;
and/or that a main housing (43) of the holder (30) has an annular contact surface (59).

10. A holder (30), designed for a system according to any one of the preceding claims.

11. An accessory for a bicycle, in particular a light (10), bicycle computer, electronic control unit, bag, camera, bottle holder or storage box, comprising a holder (30) according to the preceding claim.

12. A clamping shell (20) designed for a system according to any one of the preceding claims.

13. A bicycle with a handlebar clamp, comprising at least one clamping shell (20) according to the preceding claim.

## Revendications

1. Système de fixation d'un accessoire (1) à la potence d'un vélo, comprenant une coque de serrage (20) qui est formée comme une partie du collier de serrage du guidon, la coque de serrage (20) étant définie par deux moitiés, les deux moitiés étant reliées l'une à l'autre par au moins une traverse (22a),
le système comprenant un support (30) pour l'accessoire, qui peut être fixé à la ou aux traverses (22a),
**caractérisé en ce que** la ou les traverses (22a) présentent une extension pointée vers l'extérieur (25a, 25b).

2. Système de fixation d'un accessoire (1) selon la revendication précédente, **caractérisé en ce que** le support (30) peut être suspendu à la ou aux traverses (22a).

3. Système de fixation d'un accessoire (1) selon l'une quelconque des revendications précédentes, **caractérisé en ce que** le support (30) peut être enclenché sur la ou les traverses (22a).

4. Système de fixation d'un accessoire (1) selon la revendication précédente, **caractérisé en ce que** l'enclenchement peut être déclenché au moyen d'un organe d'enclenchement actionnable contre une précontrainte de ressort.

5. Système de fixation d'un accessoire (1) selon l'une quelconque des revendications précédentes, **caractérisé en ce que** le système comprend une extension pointée vers le haut et une extension pointée vers le bas (25a, 25b) en position assemblée.

6. Système de fixation d'un accessoire (1) selon l'une quelconque des revendications précédentes, **caractérisé en ce que** la ou les extensions (25a, 25b) sont disposées entre des trous traversants (16) de la coque de serrage (20).

7. Système de fixation d'un accessoire (1) selon l'une quelconque des trois revendications précédentes, **caractérisé en ce que** la ou les extensions (25a, 25b) sont de forme sensiblement parallélépipédique.

8. Système de fixation d'un accessoire (1) selon l'une quelconque des revendications précédentes, **caractérisé en ce que** les deux moitiés sont reliées l'une à l'autre par au moins deux traverses (22a) réparties sur la circonférence, en particulier les traverses (22a) étant biseautées au voisinage d'un évidement prévu entre lesdites traverses (22a).

9. Système de fixation d'un accessoire (1) selon l'une quelconque des revendications précédentes, **caractérisé en ce que**
le support (30) comporte un encliquetage qui s'engage sur la ou les traverses (22a); et/ou que le support (30) comporte deux crochets (31a, 31b) avec lesquels il peut être accroché sur deux traverses (22a) d'un côté ,
ou que le support (30) comporte un crochet (31a, 31b) avec lequel il peut être accroché d'un côté, et un autre crochet mobile (30) avec lequel il peut être accroché du côté opposé, en particulier un crochet (30) qui peut être déplacé le long d'une surface de guidage inclinée au moyen d'une vis (40),
et/ou que le système comporte un premier support (30) qui peut être encliqueté, et un second support (30) qui peut être fixé au moyen d'une vis (40), en particulier au moyen d'un crochet (31a, 31b) déplaçable par l'intermédiaire de la vis (40),
et/ou que la ou les traverses (22a) présentent une section transversale partiellement circulaire,
et/ou qu'un boîtier principal (43) du support (30) présente une surface de contact annulaire (59).

10. Support (30) conçu pour un système selon l'une quelconque des revendications précédentes.

11. Accessoire pour vélo, notamment éclairage (10), compteur de vélo, unité de commande électronique, sacoche, appareil photo, porte-bidon ou boîte de rangement, comprenant un support (30) selon la revendication précédente.

12. Coque de serrage (20) conçue pour un système selon l'une quelconque des revendications précédentes.

13. Vélo avec un collier de serrage de guidon, comprenant au moins une coque de serrage (20) selon la revendication précédente.
